(19) Europäisches Patentamt
European Patent Office
Office européen des brevets

(11) **EP 4 708 118 A1**

(12) **EUROPEAN PATENT APPLICATION**
published in accordance with Art. 153(4) EPC

(43) Date of publication:
**11.03.2026 Bulletin 2026/11**

(21) Application number: **24842369.1**

(22) Date of filing: **16.07.2024**

(51) International Patent Classification (IPC):
**G06F 40/295** *(2020.01)*   **G06F 8/30** *(2018.01)*
**G06F 40/289** *(2020.01)*

(86) International application number:
**PCT/CN2024/105683**

(87) International publication number:
**WO 2025/016380 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.07.2023 CN 202310901078**

(71) Applicant: **Huawei Technologies Co., Ltd.
Shenzhen, Guangdong 518129 (CN)**

(72) Inventors:
• **HU, Hailin
Shenzhen, Guangdong 518129 (CN)**
• **LIU, Xinduo
Shenzhen, Guangdong 518129 (CN)**
• **FU, Yifei
Shenzhen, Guangdong 518129 (CN)**
• **DONG, Wenhui
Shenzhen, Guangdong 518129 (CN)**
• **WANG, Yunhe
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND RELATED DEVICE**

(57)    A data processing method may be applied to the field of artificial intelligence. The method includes: obtaining a first text and a second text, where the first text is a text that needs to be determined, and the second text is content for determining the first text; determining a first prompt prompt and a second prompt based on an entity included in the second text, where the first prompt indicates to recognize description of each entity in the first text, and the second prompt indicates to determine, as indicated by the second text, the first text based on the description of each entity; and obtaining, based on the first text, the first prompt, and the second prompt by using a language model, a result of determining the first text. In this application, the first prompt is used to guide the language model to recognize explanation for an entity in the first text, the language model automatically decomposes a task of understanding an element into prompts of an NLP task for input, and the language model is guided by using the prompts for text determining by using the description of the entity, to improve language analysis efficiency and precision.

FIG. 5

## Description

This application claims priority to Chinese Patent Application No. 202310901078.X, filed with the China National Intellectual Property Administration on July 20, 2023 and entitled "DATA PROCESSING METHOD AND RELATED APPARATUS", which is incorporated herein by reference in its entirety.

## TECHNICAL FIELD

This application relates to the field of artificial intelligence, and in particular, to a data processing method and a related apparatus.

## BACKGROUND

Artificial intelligence (artificial intelligence, AI) is theories, methods, techniques, and application systems that utilize digital computers or machines controlled by digital computers to simulate, extend, and enhance human intelligence, enabling them to perceive the environment, acquire knowledge, and apply knowledge to achieve optimal results. In other words, AI is a branch of computer science that aims to understand the essence of intelligence and to produce new intelligent machines capable of responding in ways similar to human intelligence. AI also involves the study of design principles and implementation methods for various intelligent machines, enabling them to possess the abilities of perception, reasoning, and decision-making.

The explosion of large language models demonstrates that these models, trained on massive corpus data, can exhibit language communication abilities and logical reasoning abilities approaching those of humans. Currently, LLMs have achieved significant breakthroughs in various text-related and relational modeling tasks, providing novel human-machine interaction interfaces and sparking a new technological revolution.

When directly applied to professional vertical domains, foundation models only possess general semantic understanding abilities and lack the ability to connect the intension and extension of domain-specific concepts (for example, legal, medical, and the like) or establish relationships between different legal concepts. For distinct vertical domain concepts, different NLP capabilities need to be invoked for processing, requiring additional input management.

Therefore, there is an urgent need for a more efficient method for vertical-domain language analysis by using language models.

## SUMMARY

This application provides a data processing method, to improve language analysis efficiency and precision.

According to a first aspect, this application provides a data processing method. The method includes: obtaining a first text and a second text, where the first text is a text that needs to be determined, and the second text is content for determining the first text; determining a first prompt prompt and a second prompt based on an entity included in the second text, where the first prompt indicates to recognize description of each entity in the first text, and the second prompt indicates to determine, as indicated by the second text, the first text based on the description of each entity; and obtaining, based on the first text, the first prompt, and the second prompt by using a language model, a result of determining the first text.

In this application, the first prompt is used to guide the language model to recognize explanation for an entity in the first text, a task of understanding an element is automatically decomposed, by using the language model, into a prompt of an NLP task for input, and the language model is guided by using the prompt to perform text determining by using the description of the entity, to improve language analysis efficiency and precision.

In a possible implementation, determining the first prompt prompt and the second prompt based on an entity included in the second text includes: determining the first prompt prompt and the second prompt based on the entity included in the second text by using the language model.

In a possible implementation, the method further includes:
obtaining a third text, where the third text is content for determining the first text; determining, based on the third text by using the language model, that the third text includes an abstract entity; and obtaining the second text based on the third text and received explanation that is input by a user for the abstract object.

In a possible implementation, the method further includes: obtaining description of each entity based on the first text and the first prompt by using the language model, and constructing the second prompt based on the description of each entity.

In a possible implementation, the first text includes case description, and the second text includes law elements. Alternatively, the first text includes medical condition description, and the second text includes medical elements.

According to a second aspect, this application provides a data processing apparatus. The apparatus includes:

an obtaining module, configured to obtain a first text and a second text, where the first text is a text that needs to be determined, and the second text is content for determining the first text; and

a processing module, configured to: determine a first prompt prompt and a second prompt based on an entity included in the second text, where the first prompt indicates to recognize description of each entity in the first text, and the second prompt indicates to determine, as indicated by the second text, the first text based on the description of each entity; and obtain, based on the first text, the first prompt, and the second prompt by using a language model, a result of determining the first text.

In a possible implementation, the processing module is specifically configured to: determine the first prompt prompt and the second prompt based on the entity included in the second text by using a language model.

In a possible implementation, the obtaining module is further configured to:

obtain a third text, where the third text is content for determining the first text; and
the processing module is further configured to: determine, based on the third text by using a language model, that the third text includes an abstract entity; and obtain the second text based on the third text and received explanation that is input by a user for the abstract object.

In a possible implementation, the processing module is further configured to: obtain description of each entity based on the first text and the first prompt by using the language model, and construct the second prompt based on the description of each entity.

In a possible implementation, the first text includes case description, and the second text includes law elements. Alternatively, the first text includes medical condition description, and the second text includes medical elements.

According to a third aspect, an embodiment of this application provides a data processing apparatus. The apparatus may include a memory, a processor, and a bus system. The memory is configured to store a program, and the processor is configured to execute the program in the memory, to perform any one of the optional methods according to the first aspect.

According to a fourth aspect, an embodiment of this application provides a computer-readable storage medium. The computer-readable storage medium stores a computer program, and when the computer program is run on a computer, the computer is caused to perform the first aspect and any one of the optional methods.

According to a fifth aspect, an embodiment of this application provides a computer program product, including code. When the code is executed, the code is used to implement the first aspect and any one of the optional methods.

According to a sixth aspect, this application provides a chip system. The chip system includes a processor, configured to support a data processing apparatus in implementing the functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete device.

**BRIEF DESCRIPTION OF DRAWINGS**

FIG. 1A is a diagram of a structure of a main artificial intelligence framework;
FIG. 1B is a diagram of a system architecture according to an embodiment of this application;
FIG. 1C is a diagram of a system architecture according to an embodiment of this application;
FIG. 1D is a diagram of a system architecture according to an embodiment of this application;
FIG. 2 is a diagram of a system architecture according to an embodiment of this application;
FIG. 3 is a diagram of a system architecture according to an embodiment of this application;
FIG. 4 is a diagram of a cloud service according to an embodiment of this application;
FIG. 5 is a schematic flowchart of a data processing method according to an embodiment of this application;
FIG. 6 is a schematic flowchart of a data processing method according to an embodiment of this application;
FIG. 7 is a diagram of a structure of a data processing apparatus according to an embodiment of this application;
FIG. 8 is a diagram of a terminal device according to an embodiment of this application;
FIG. 9 is a diagram of a server according to an embodiment of this application; and
FIG. 10 is a diagram of a chip according to an embodiment of this application.

**DESCRIPTION OF EMBODIMENTS**

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with the development of technologies and emergence of a new scenario, the technical solutions provided in embodiments of this application are also applicable to a similar technical problem.

In the specification, the claims, and the accompanying drawings of this application, terms such as "first" and "second" are intended to distinguish between similar objects but do not necessarily indicate a particular order or sequence. It should be understood that the terms used in such a way are interchangeable in appropriate circumstances, which is merely a manner used for distinguishing when objects having a same attribute are described in embodiments of this application. In addition, the terms "include", "have" and any other variants thereof mean to cover a non-exclusive inclusion, so that a process, a method, a system, a product, or a device that includes a series of units is not necessarily limited to those units, but may include another unit that is not expressly listed or that is inherent to the process, the method, the product, or the device.

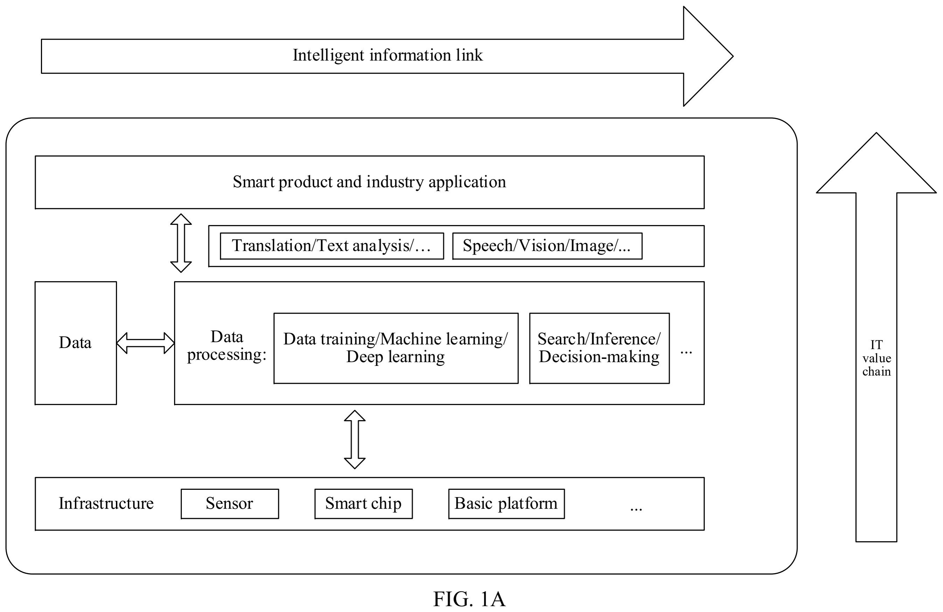

First, an overall working process of an artificial intelligence system is described. FIG. 1A is a diagram of a structure of a main artificial intelligence framework. The following describes the main artificial intelligence framework from two dimensions: "intelligent information chain" (a horizontal axis) and "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to an information technology industry in a process from an underlying infrastructure of the artificial intelligence and information (provision and processing of technological implementations) to industry ecology of a system.

(1) Infrastructure

The infrastructure provides computing capability support for the artificial intelligence system, implements communication with the outside world, and implements support via a basic platform. Communication with the outside is implemented through a sensor. A computing capability is provided by an intelligent chip (a hardware acceleration chip like a CPU, an NPU, a GPU, an ASIC, or an FPGA). The basic platform includes related platforms, such as a distributed computing framework and a network, for guarantee and support, and may include cloud storage and computing, an interconnected network, and the like. For example, the sensor communicates with the outside to obtain data, and the data is provided to an intelligent chip in a distributed computing system provided by the basic platform for computing.

(2) Data

Data at an upper layer of the infrastructure indicates data sources in the field of artificial intelligence. The data relates to graphs, images, speeches, and texts, and further relates to internet of things data of conventional devices, including service data of an existing system and perception data such as force, displacement, liquid levels, temperature, and humidity.

(3) Data processing

The data processing usually includes data training, machine learning, deep learning, search, inference, decision-making, and other manners.

Symbolic and formal intelligent information modeling, extraction, pre-processing, training, and the like may be performed on the data through the machine learning and the deep learning.

Inference refers to the process in computers or intelligent systems where human-like intelligent reasoning methods are simulated. Based on reasoning control strategies, it utilizes formalized information to conduct machine thinking and solve problems, with typical functions being search and matching.

Decision-making is a process of making a decision after inference is performed based on intelligent information, and functions such as classification, ranking, and prediction are usually provided.

(4) General capability

After the foregoing data processing is performed on the data, some general capabilities may be further formed based on a data processing result. For example, the general capabilities may be an algorithm or a general-purpose system, for example, translation, text analysis, computer vision processing, speech recognition, or image recognition.

(5) Smart product and industry application

The smart product and the industry application refer to products and application of the artificial intelligence system in various fields. The smart product and the industry application refer to encapsulation of an overall solution for the artificial intelligence, to implement productization and practical application of intelligent information decision-making. Application fields of the intelligent information decision-making mainly include a smart terminal, smart transportation, smart healthcare, autonomous driving, a smart city, and the like.

This application may be applied to the photographing field. The following describes an application scenario of embodiments of this application.

The application scenario of this application is first described. This application may be applied to, but not limited to, a cloud server with a vertical-domain language analysis function, a cloud service provided by a cloud server, or the like.

The following describes a vertical-domain language analysis application program in embodiments of this application respectively from the perspective of functional architecture and product architecture for implementing a function.

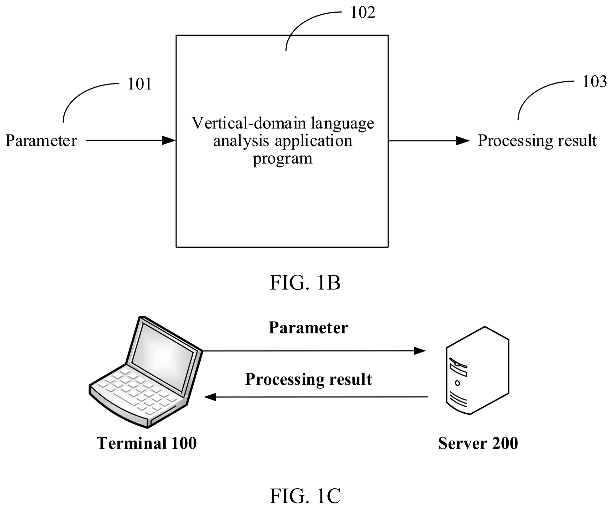

FIG. 1B is a diagram of a functional architecture of a vertical-domain language analysis application program according to an embodiment of this application.

In a possible implementation, as shown in FIG. 1B, a vertical-domain language analysis application program 102 may receive a parameter 101 (for example, including a text on which language determining needs to be performed and content for determining) and generate a processing result 103 (for example, a determining result). The vertical-domain language analysis application program 102 may be executed on (for example) at least one computer system, and includes computer code. When the computer code is executed by one or more computers, the computers are caused to perform a method provided in embodiments of this application.

FIG. 1C is a diagram of an entity architecture of running a vertical-domain language analysis application program according to an embodiment of this application.

FIG. 1C is a diagram of a system architecture. The system may include a terminal 100 and a server 200. The server 200 may include one or more servers (where an example in which one server is included is used for description in FIG. 1C), and the server 200 may provide a vertical-domain language analysis function for one or more terminals.

A vertical-domain language analysis application program may be installed on the terminal 100. The application program may provide an interface, so that the terminal 100 may receive a related parameter (for example, a parameter 101) input by a user, and send the parameter to the server 200. The server 200 may obtain a processing result (for example, a determining result) based on the received parameter, and return the processing result to the terminal 100. The terminal 100 may perform photographing by using the processing result 103, to obtain a photographing result.

It should be understood that, in some optional implementations, the terminal 100 may alternatively complete an action of obtaining a processing result based on a received parameter without cooperation of the server. This is not limited in embodiments of this application.

The following describes a product form of the terminal 100 in FIG. 1C.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a laptop, a personal digital assistant (personal digital assistant, PDA), or the like. This is not limited in embodiments of this application.

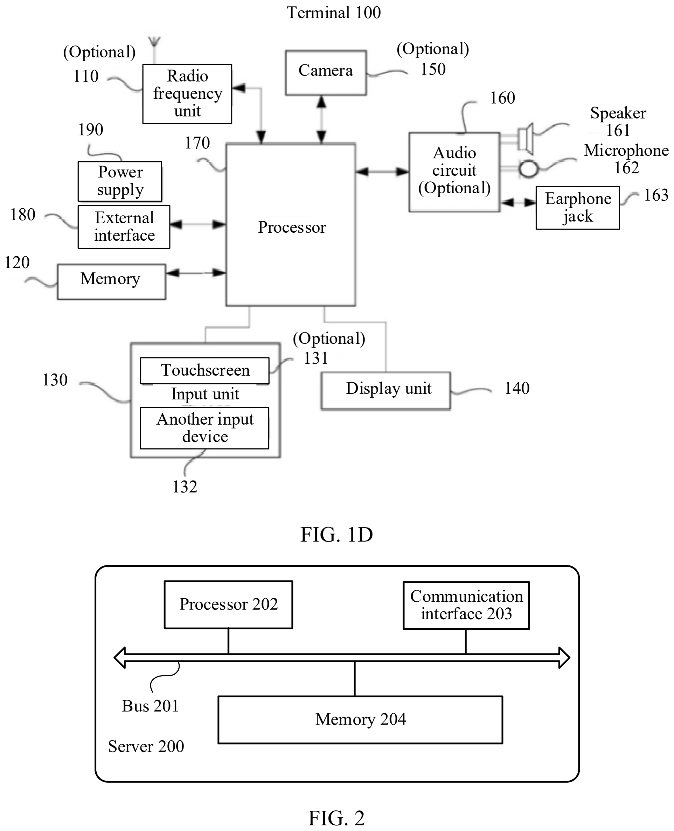

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of a terminal or a multi-functional device, and does not constitute a limitation on the terminal or the multi-functional device. The terminal or the multi-functional device may include more or fewer components than those shown in the figure, or combine some components, or have different components.

The input unit 130 may be configured to: receive input digital or character information, and generate a key signal input related to a user setting and function control of the portable multi-functional apparatus. Specifically, the input unit 130 may include a touchscreen 131 (optional) and/or another input device 132. The touchscreen 131 may collect a touch operation performed by a user on or near the touchscreen (for example, an operation performed by the user on or near the touchscreen by using any appropriate object such as a finger, a joint, or a stylus), and drive a corresponding connection apparatus based on a preset program. The touchscreen may detect a touch operation performed by the user on the touchscreen, convert the touch operation into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, there may be a plurality of types of touchscreens such as a resistive touchscreen, a capacitive touchscreen, an infrared touchscreen, and a surface acoustic wave touchscreen. In addition to the touchscreen 131, the input unit 130 may include another input device. Specifically, the another input device 132 may include but is not limited to one or more of the following: a physical keyboard, a functional key (for example, a volume control key or an on/off key), a trackball, a mouse, a joystick, and the like.

The another input device 132 may receive an input text on which language determining needs to be performed and content for determining

The display unit 140 may be configured to display information input by the user, information provided to the user, various menus of the terminal 100, an interaction interface, a file, and/or playing of any multimedia file. In this embodiment of this application, the display unit 140 may be configured to display an interface of the vertical-domain language analysis application program, a processing result, or the like.

The memory 120 may be configured to store instructions and data. The memory 120 may mainly include an instruction storage area and a data storage area. The data storage area may store various types of data such as a multimedia file and a text. The instruction storage area may store a software unit, for example, an operating system, an application, and instructions required for at least one function, or subsets and extended sets thereof. The memory 120 may further include a non-volatile random access memory, and provide functions to the processor 170, including managing hardware, software, and a data resource in a computing processing device and supporting control of software and an application. The memory 120 is further configured to: store a multimedia file, and store a running program and application.

The processor 170 is a control center of the terminal 100, connects parts of the entire terminal 100 through various interfaces and circuits, and executes various functions of the terminal 100 and processes data by running or executing the instructions stored in the memory 120 and invoking the data stored in the memory 120, to control the terminal device as a whole. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It may be understood that the modem processor may not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component of the computing processing device, and read and process data in software, especially read and process the data and the program in the memory 120, so that functional modules in the memory 120 perform corresponding functions, to control a corresponding component to act as required by the instructions.

The memory 120 may be configured to store software code related to a data processing method. The processor 170 may perform steps of a data processing method for a chip, or may schedule another unit (for example, the input unit 130 and the display unit 140) to implement a corresponding function.

The radio frequency unit 110 (optional) may be configured to receive and send information or receive and send a signal in a call process. For example, after receiving downlink information of a base station, the radio frequency unit 110 sends the downlink information to the processor 170 for processing. In addition, the radio frequency unit 110 sends uplink data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

It should be understood that the radio frequency unit 110 is optional, and may be replaced with another communication interface, for example, may be a network interface.

The terminal 100 further includes the power supply 190 (such as a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash lamp, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 2, but this does not mean that there is only one bus or only one type of bus.

The processor 202 may be any one or more of processors such as a central processing unit (central processing unit CPU), a graphics processing unit (graphics processing unit, GPU), a microprocessor (microprocessor, MP), or a digital signal processor (digital signal processor DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a hard disk drive (hard disk drive, HDD), or a solid state drive (solid state drive, SSD).

The memory 204 may be configured to store software code related to a data processing method. The processor 202 may perform steps of a data processing method for a chip, or may schedule another unit to implement a corresponding function.

It should be understood that the terminal 100 and the server 200 may be central or distributed devices. Processors (for example, the processor 170 and the processor 202) in the terminal 100 and the server 200 each may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, such as the CPU or the DSP, or may be a hardware system that does not have the instruction execution function, such as the ASIC or the FPGA, or may be a combination of the hardware system that does not have the instruction execution function and the hardware system that has the instruction execution function.

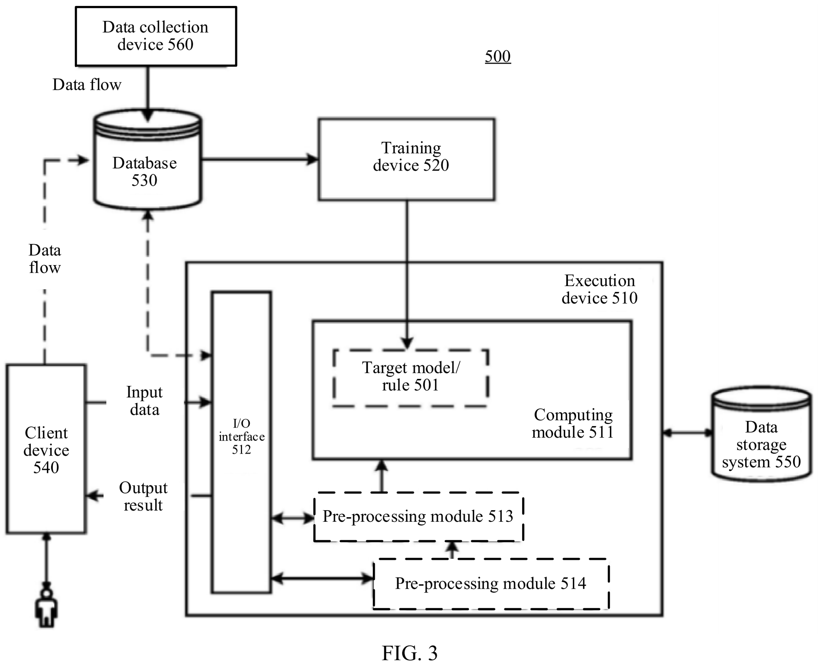

It should be understood that steps related to a model inference process in embodiments of this application relate to an AI-related operation. When an AI operation is performed, an instruction execution architecture of the terminal device and the server is not limited to the architecture in which the processor and the memory are combined and that is described above. The following describes in detail a system architecture provided in an embodiment of this application with reference to FIG. 3.

FIG. 3 is a diagram of a system architecture according to an embodiment of this application. As shown in FIG. 3, a system architecture 500 includes an execution device 510, a training device 520, a database 530, a client device 540, a data storage system 550, and a data collection system 560.

The execution device 510 includes a computing module 511, an I/O interface 512, a pre-processing module 513, and a pre-processing module 514. The computing module 511 may include a target model/rule 501, and the pre-processing module 513 and the pre-processing module 514 are optional.

The execution device 510 may be the foregoing terminal device that runs a vertical-domain language analysis application program.

The data collection device 560 is configured to collect training samples. After collecting the training samples, the data collection device 560 stores the training samples in the database 530.

The training device 520 may pre-train a to-be-trained neural network based on the training samples maintained in the database 530, to obtain the target model/rule 501.

It should be understood that the training device 520 may perform a pre-training process on the to-be-trained neural network based on the training samples maintained in the database 530, or perform fine-tuning on a model based on the pre-training.

It should be noted that in an actual application, the training samples maintained in the database 530 are not necessarily collected by the data collection device 560, and may be received from another device. In addition, it should be noted that the training device 520 does not necessarily train the target model/rule 501 based on the training samples maintained in the database 530, and may perform model training by obtaining a training sample from a cloud or another location. The foregoing descriptions should not be construed as a limitation on this embodiment of this application.

The target model/rule 501 (for example, a language model in this embodiment of this application) obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, or may be a server or the like.

Specifically, the training device 520 may transfer a trained model to the execution device 510.

In FIG. 3, the input/output (input/output, I/O) interface 512 is configured for the execution device 510, and is configured for data exchange with an external device. A user may input data (for example, a text on which language determining needs to be performed and content for determining in this embodiment of this application) to the I/O interface 512 via the client device 540.

The pre-processing module 513 and the pre-processing module 514 are configured to perform pre-processing based on the input data received by the I/O interface 512. It should be understood that the pre-processing module 513 and the pre-processing module 514 may not exist, or there may be only one pre-processing module. When the pre-processing module 513 and the pre-processing module 514 do not exist, the computing module 511 may be directly used to process the input data.

In a process in which the execution device 510 pre-processes the input data or the computing module 511 in the execution device 510 performs related processing such as computing, the execution device 510 may invoke data, code, and the like in the data storage system 550 for corresponding processing, and may store, in the data storage system 550, data, instructions, and the like that are obtained through the corresponding processing.

Finally, the I/O interface 512 provides a processing result to the client device 540, to provide the processing result to the user.

In the case shown in FIG. 3, the user may manually provide input data, and an operation may be performed on the "manually provided input data" through an interface provided by the I/O interface 512. In another case, the client device 540 may automatically send the input data to the I/O interface 512. If the client device 540 is required to obtain authorization from the user before automatically sending the input data, the user may set a corresponding permission in the client device 540. The user may view, on the client device 540, a result output by the execution device 510. The result may be specifically presented in a specific form, for example, display, sound, or action. The client device 540 may also be used as a data collection terminal, collect the input data input into the I/O interface 512 and the output result output from the I/O interface 512 that are shown in the figure, use the input data and the output result as new sample data, and store the new sample data in the database 530. Certainly, the input data and the output result may not be collected via the client device 540, and the I/O interface 512 directly uses, as new sample data, the input data input into the I/O interface 512 and the output result output from the I/O interface 512 that are shown in the figure, and stores the new sample data in the database 530.

It should be noted that FIG. 3 is merely a diagram of a system architecture according to this embodiment of this application. A location relationship between a device, a component, a module, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Descriptions from a perspective of model inference are as follows:

In this embodiment of this application, the computing module 511 in the execution device 520 may obtain the code stored in the data storage system 550, to implement steps related to a model inference process in this embodiment of this application.

In this embodiment of this application, the computing module 511 in the execution device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or the DSP, or may be a hardware system that does not have the instruction execution function, for example, the ASIC or the FPGA, or may be a combination of the hardware system that does not have the instruction execution function and the hardware system that has the instruction execution function.

Specifically, the computing module 511 in the execution device 520 may be the hardware system that has the instruction execution function. Steps that are related to the model inference process and that are provided in this embodiment of this application may be storing software code in a memory. The computing module 511 in the execution device 520 may obtain the software code from the memory, and execute the obtained software code to implement the steps that are related to the model inference process and that are provided in this embodiment of this application.

It should be understood that the computing module 511 in the execution device 520 may be the combination of the hardware system that does not have the instruction execution function and the hardware system that has the instruction execution function. Some of the steps that are related to the model inference process and that are provided in this embodiment of this application may be implemented by the hardware system that does not have the instruction execution function and that is in the computing module 511 in the execution device 520. This is not limited herein.

Descriptions from a perspective of model training are as follows:

In this embodiment of this application, the training device 520 may obtain code stored in a memory (which is not shown in FIG. 3, and may be integrated into the training device 520 or separately deployed from the training device 520), to implement steps related to model training in this embodiment of this application.

In this embodiment of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, such as a CPU or the DSP, or may be a hardware system that does not have an instruction execution function, such as the ASIC or the FPGA, or may be a combination of the hardware system that does not have the instruction execution function and the hardware system that has the instruction execution function.

It should be understood that the training device 520 may be the combination of the hardware system that does not have the instruction execution function and the hardware system that has the instruction execution function. Some of the steps that are related to model training and that are provided in this embodiment of this application may be implemented by the hardware system that does not have the instruction execution function and that is in the training device 520. This is not limited herein.

This application may be further applied to a vertical-domain language analysis function cloud service provided by a server.

In a possible implementation, the server may provide a vertical-domain language analysis function service for a terminal side through an application programming interface (application programming interface, API).

The terminal device may send a related parameter (for example, a text on which language determining needs to be performed and content for determining) to the server through an API provided by a cloud, and the server may obtain a processing result and the like) based on the received parameter, and return the processing result to the terminal.

For descriptions about the terminal and the server, refer to the descriptions in the foregoing embodiments. Details are not described herein again.

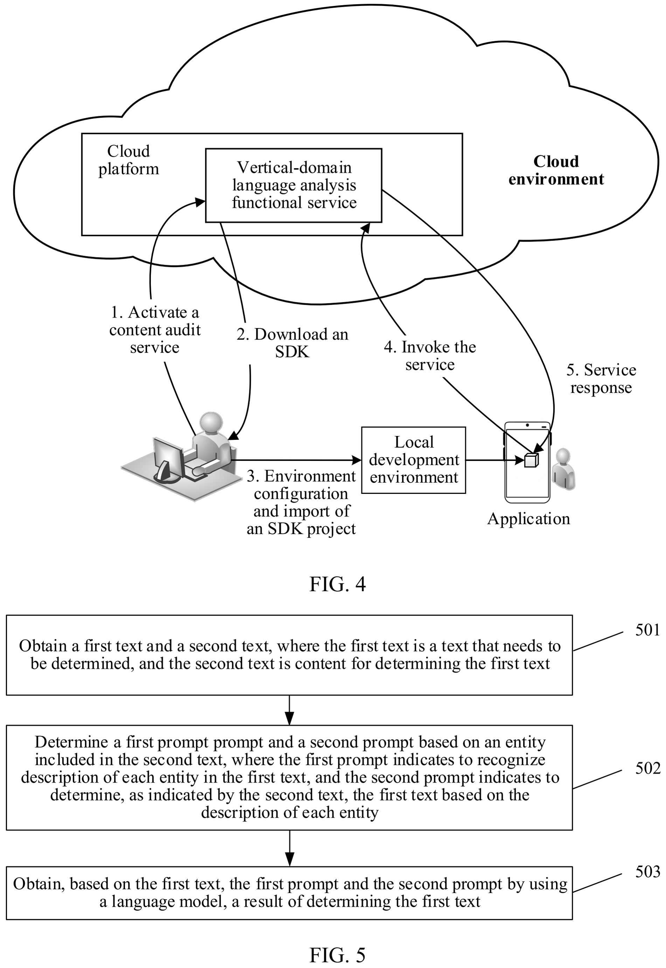

FIG. 4 shows a procedure of using a vertical-domain language analysis function cloud service provided by a cloud platform.

1. Activate and purchase a content audit service.

2. A user may download a software development kit (software development kit, SDK) corresponding to the content audit service. Usually, the cloud platform provides SDKs of a plurality of development versions, for example, a Java-version SDK, a Python-version SDK, a PHP-version SDK, and an Android-version SDK, for selection by the user based on a development environment requirement.

3. After locally downloading an SDK of a corresponding version based on the requirement, the user imports an SDK project to a local development environment, and performs configuration and commissioning in the local development environment. Another function may be further developed in the local development environment, to form an application that integrates vertical-domain language analysis function capabilities.

4. In a process of using a vertical-domain language analysis function application, invoking of the API for the vertical-domain language analysis function may be triggered when the vertical-domain language analysis function is required. When the application triggers the vertical-domain language analysis function, an API request is initiated to a running instance of the vertical-domain language analysis function service in a cloud environment, where the API request carries a text on which language determining needs to be performed and content for determining, and the running instance in the cloud environment processes an image to obtain a processing result.

5. The cloud environment returns the processing result to the application, to complete one time of invoking of the vertical-domain language analysis function.

Embodiments of this application relate to massive application of a neural network. Therefore, for ease of understanding, the following first describes related terms and concepts related to the neural network and the like in embodiments of this application.

(1) Neural network

The neural network may include a neural unit. The neural unit may be an operation unit that uses xs (namely, input data) and an intercept of 1 as an input. An output of the operation unit may be as follows:

$$h_{W,b}\left(x\right) = f\left(W^T x\right) = f(\sum\nolimits_{s=1}^{n} W_s x_s + b);$$

s=1, 2, ..., or n, n is a natural number greater than 1, Ws is a weight of xs, b is a bias of the neural unit, and f is an activation function (activation function) of the neural unit, and is used to introduce a non-linear characteristic into the neural network, to convert an input signal in the neural unit into an output signal. The output signal of the activation function may be used as an input of a next convolutional layer, and the activation function may be a sigmoid function. The neural network is a network formed by linking a plurality of single neural units together, that is, an output of a neural unit may be an input of another neural unit. An input of each neural unit may be connected to a local receptive field of a previous layer, to extract a feature of the local receptive field. The local receptive field may be an area including several neural units.

(2) Natural language processing (natural language processing, NLP)

A natural language (natural language) is a human language, and the natural language processing (NLP) is processing of the human language. The natural language processing is a process of systematic analysis, understanding, and information extraction of text data in an intelligent and efficient manner. Based on the NLP and a component of the NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(3) Deep neural network

The deep neural network (Deep Neural Network, DNN), also referred to as a multilayer neural network, may be understood as a neural network having many hidden layers. There is no particular measurement standard for the term "many" herein. Classification of the DNN is performed based on locations of different layers, and a neural network in the DNN may be divided into three layers: an input layer, a hidden layer, and an output layer. Generally, a first layer is the input layer, a last layer is the output layer, and a middle layer is the hidden layer. Layers are fully connected with each other. To be specific, any neuron at an $i^{th}$ layer is definitely connected to any neuron at an $(i+1)^{th}$ layer. Although the DNN seems complicated, it is not complex from a perspective of working at each layer. Briefly, the DNN is presented in a form of the following linear relational expression: $\vec{y} = \alpha(W\vec{x} + \vec{b})$. $\vec{x}$ is an input vector, $\vec{y}$ is an output vector, b is an offset vector, W is a weight matrix (also referred to as a coefficient), $\alpha()$ is an activation function. At each layer, the output vector $\vec{y}$ is obtained by performing a simple operation on the input vector $\vec{x}$. Because there are a large quantity of layers of the DNN, there are a large quantity of coefficients W and offset vectors $\vec{b}$. Definitions of these parameters in the DNN are as follows: The coefficient W is used as an example. It is assumed that in a three-layer DNN, a linear coefficient from a fourth neuron at a second layer to a second neuron at a third layer is defined as $W_{24}^{3}$. A superscript 3 represents a layer at which the coefficient W is located, and a subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. A process of training the deep neural network is a process of learning the weight matrix, and a final objective of the training is to obtain a weight matrix for all layers of a trained deep neural network (a weight matrix including vectors W for a plurality of layers).

(4) Prompt prompt

The prompt is a term for the natural language, including a hard template and a soft template. The hard template generally includes some natural language words or sentences with a specific meaning, and the soft template generally includes a parameterized representation vector without a meaning.
Explosion of a large language model indicates that a large language model based on large-scale corpus data can show a language communication capability and a logical reasoning capability similar to those of a human. Currently, the large language model has made breakthroughs in various text and associated modeling tasks, providing a new human-machine interaction interface and launching a new round of technical revolution.
When a basic model is directly applied to a professional domain field, only a general semantic understanding capability is available. Connotation and extension of a concept of the vertical domain (for example, the legal field and the medical field) and a relationship between different legal concepts are not connected. For different concepts of the vertical domain, different NLP capabilities need to be invoked for processing, and additional input management is required.
Therefore, there is an urgent need for a more efficient method for vertical-domain language analysis by using a language model.
To resolve the foregoing problem, this application provides a data processing method. The data processing method may be a model training process, for example, may be a model pre-training process or a model fine-tuning process.

FIG. 5 is a diagram of an embodiment of a data processing method according to an embodiment of this application. As shown in FIG. 5, the data processing method provided in this embodiment of this application includes the following steps.

501: Obtain a first text and a second text, where the first text is a text that needs to be determined, and the second text is content for determining the first text.

In some scenarios, whether the first text meets information indicated by the second text needs to be determined.

The first text may be a to-be-determined text. For example, in the legal field, the first text may be case description, for example, a statement of a party, a court judgment document, or an indictment. For example, in the medical field, the first text may be medical condition description.

The second text may be content for determining the first text. For example, the second text may include legal factors to-be-extracted (which may also be referred to as entities in this embodiment of this application). Optionally, the second text may be a text segment of a legal provision (or other legal provisions). For another example, the second text may include medical factors to-be-extracted. Optionally, the second text may be a diagnosis basis.

502: Determine a first prompt prompt and a second prompt based on an entity included in the second text, where the first prompt indicates to recognize description of each entity in the first text, and the second prompt indicates to determine, as indicated by the second text, the first text based on the description of each entity.

The second text may include at least one entity. The entity herein may be the to-be-extracted legal factor, medical factor, or the like described above. The entity may be a noun object, a concept, or the like in a vertical domain. Description of an entity may vary with scenarios.

For example, the second text is: The income percentage from foreign entity of the agent is normally less than 50%, and the first text is: As could be seen from the facts on record as well as observations made by learned Commissioner (Appeals), during the year under consideration, Samsara Shipping Pvt. Ltd., has provided services to six shipping companies including the assessee and out of the total commission earned of ' 3,83,20,806, it received an amount of ' 46,53,998, from the assessee which constitutes a meagre 12.14% of the total income earned by Samsara Shipping Pvt. Ltd. from various principals.

Entities in the second text may include "the agent" and "income percentage". To accurately determine whether the first text meets the content for determining that is indicated in the second text, the description of the entity may be extracted from the first text. For example, description related to "the agent" and description related to "income percentage" are extracted from the first text.

For an entity in a text including the content for determining, the entity may be a specific element (for example, whether duration of a behavior exceeds a specific period), or may be an abstract element (for example, whether a subject operates independently). When the entity is an abstract element, the content for determining that is indicated by the second text is not accurately expressed in most cases. Therefore, after the second text is obtained, whether an entity in the second text is an abstract element may be determined (where a determining step may be performed by using a language model). If there is an abstract element in the second text, information indicating that explanation is required for the abstract element may be output.

Specifically, in a possible implementation, a text (for example, a third text) input by a user may be obtained, where the third text is content for determining the first text. It may be determined, based on the third text by using a language model, that the third text includes an abstract entity. The second text may be obtained based on the third text and received explanation that is input by the user for the abstract object.

The following provides a specific example:

In a possible implementation, the obtained first text may be: "As could be seen from the facts on record as well as observations made by learned Commissioner (Appeals), during the year under consideration, Samsara Shipping Pvt. Ltd., has provided services to six shipping companies including the assessee and out of the total commission earned of '3,83,20,806, it received an amount of '46,53,998, from the assessee which constitutes a meagre 12.14% of the total income earned by Samsara Shipping Pvt. Ltd. from various principals.". The obtained third text is: "The income percentage from foreign entity of the agent is immaterial".

The language model determines that there is an abstract element in the third text, and prompts the user. The user may input explanation for the abstract element, to obtain the second text: "The income percentage from foreign entity of the agent is normally less than 50%".

The following provides another specific example:

In a possible implementation, the obtained first text may be: "Hence, the functions attributed on the basis of these e-mails are not at all enlarging the scope of actual functions performed by the AE than as per the agreement and the transfer pricing report. We have already found that functions performed by Adobe India are actually not different than the agreement and transfer pricing documentation.". The obtained third text is: "The risk and function assumed by the local subsidiary is within the scope as disclosed". If the language model determines that there is no abstract factor in the third text, the third text may be directly used as the second text.

**EP 4 708 118 A1**

After an entity included in the second text is recognized, a prompt prompt may be constructed to guide the language model to determine the first text based on the content for determining that is indicated by the second text.

Specifically, the first prompt prompt and the second prompt may be determined based on the entity included in the second text, where the first prompt indicates to recognize the description of each entity in the first text, and the second prompt indicates to determine, as indicated by the second text, the first text based on the description of each entity.

The first prompt may be understood as an entity connection process, that is, a concept in the second text and a specific entity mentioned in the first text are extracted and connected, to generate a complete prompt (that is, the second prompt).

In a possible implementation, the description of each entity may be obtained based on the first text and the first prompt by using the language model, and the second prompt may be constructed based on the description of each entity.

It should be understood that prompts with different names described in this embodiment of this application may be a same prompt or different prompts. This is not limited herein. For example, the first prompt and the second prompt may be a same prompt that is input into the language model, or may be different prompts that are input into the language model in sequence or at the same time.

In this embodiment of this application, the first prompt is used to guide the language model to recognize explanation for an entity in the first text, and a task of understanding an element is automatically decomposed into a plurality of NLP tasks by using the language model, that is, the task is automatically decomposed and converted into a prompt of a standard NLP task for input.

For example, the first prompt may be:

[" {seg} Which agent's revenue is described in this passage?" → "{the agent}"],

["{seg} What is the income percentage of {the agent} from foreign entity?" → "{income percentage} "].

For example, the second prompt may be:

["Premise: The income percentage from foreign entity of {the agent} is {income percentage}. Hypothesis: The income percentage from foreign entity of {the agent} is normally less than 50%"].

For example, the first prompt may be:

["{seg} What is the local subsidiary referred to in the above?" → "{the local subsidiary} "],

[" {seg} Which file record Functions, Assets and Risk of {the local subsidiary} referred to in the above?" → "{file}"].

For example, the second prompt may be:

["Premise: {seg} Hypothesis: The risk and function assumed by {the local subsidiary} is within the scope as {file}"].

The existing problem "The risk and function assumed by the local subsidiary is within the scope as disclosed" is split into a sub-problem: "the local subsidiary" in the original text specifically refers to a specific file for describing the risk and function. The prompt "{seg} What is the local subsidiary referred to in the above?" is designed, and specific reference of "the local subsidiary", that is, "{the local subsidiary}" in the original text is obtained, that is, an entity connection phase is performed.

Based on the obtained specific reference " {the local subsidiary}", the prompt " {seg} Which file record Functions, Assets and Risk of {the local subsidiary} referred to in the above?" is designed, and specific file information "{file}" for describing the risk and function is further obtained.

Based on the obtained specific reference "{the local subsidiary}" and "{file}", the prompt "Premise: {seg} Hypothesis: The risk and function assumed by {the local subsidiary} is within the scope as {file}" is designed, to obtain a final element extraction result.

503: Obtain, based on the first text, the first prompt, and the second prompt by using the language model, a result of determining the first text.

The legal field is used as an example. The first text may be determined by invoking professional APIs such as a statutory limitation comparison API, an interest rate calculation API, and an entity verification API by using the language model.

For example, the result of determining the first text may be:

"{the agent }": Samsara Shipping Pvt. Ltd.

"{income percentage }": 12.14%;

"Premise: The income percentage from foreign entity of {the agent} is {income percentage}. Hypothesis: The income percentage from foreign entity of {the agent} is normally less than 50%": yes.

For example, the result of determining the first text may be:

"{the local subsidiary}": Adobe India;

"{file}": the agreement and transfer pricing documentation;

"Premise: {seg} Hypothesis: The risk and function assumed by {the local subsidiary} is within the scope as {file}": yes.

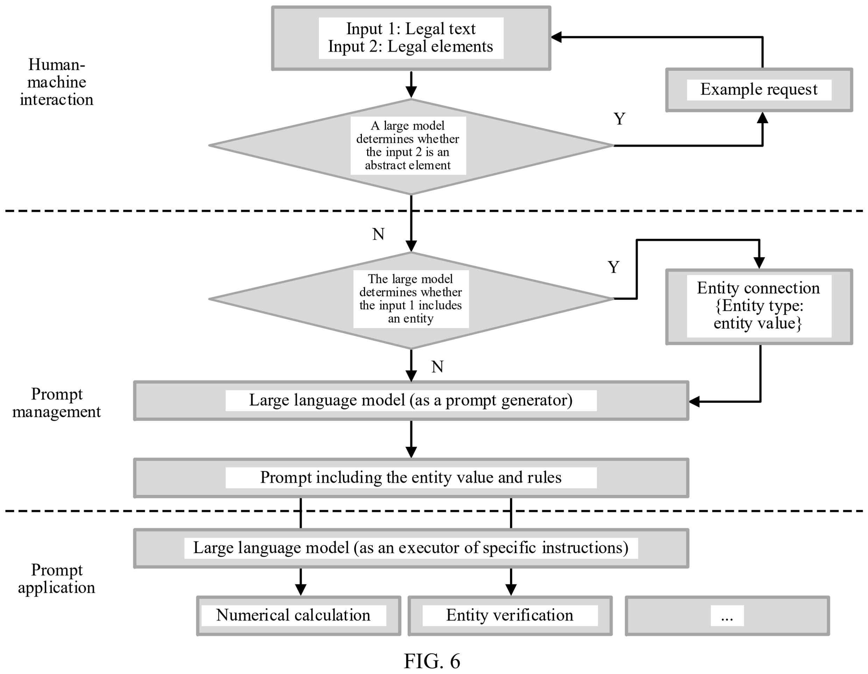

For example, FIG. 6 is a diagram of a specific procedure of an embodiment of this application described by using the legal field as an example.

Table 1 shows an example of comparison between task splitting by using a prompt manager in this embodiment of this application and performing NLI based determining by directly using ChatGPT. As shown in Table 1, in this embodiment of this application, F1 is significantly improved in terms of a sentence granularity.

Table 1

|  | Precision | Recall | F1 |
|---|---|---|---|
| Element: | | | |
| ChatGPT | 0.33 | 0.75 | 0.46 |
| Ours | 0.75 | 0.75 | 0.75 |
|  | | | |
| Element: | | | |
| ChatGPT | 0.06 | 0.60 | 0.11 |
| Ours | 1.00 | 0.20 | 0.33 |
|  | | | |
| Element: | | | |
| ChatGPT | 0.03 | 0.80 | 0.05 |
| Ours | 0.15 | 0.60 | 0.24 |

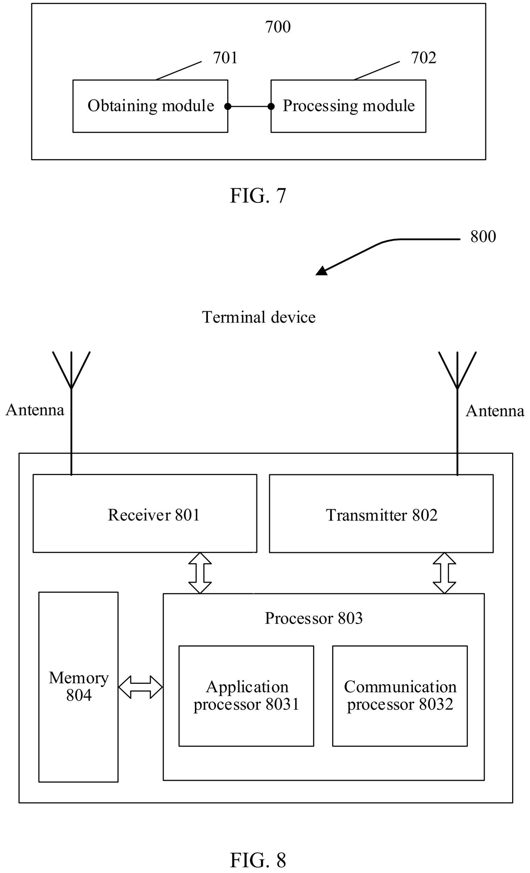

The following describes, from a perspective of an apparatus, a data processing apparatus provided in an embodiment of this application. FIG. 7 is a diagram of a structure of a data processing apparatus according to an embodiment of this application. As shown in FIG. 7, the data processing apparatus 700 provided in this embodiment of this application includes the following modules:

An obtaining module 701 is configured to obtain a first text and a second text, where the first text is a text that needs to be determined, and the second text is content for determining the first text.

For specific descriptions of the obtaining module 701, refer to the descriptions of step 501 in the foregoing embodiment. Details are not described herein again.

A processing module 702 is configured to: determine a first prompt prompt and a second prompt based on an entity included in the second text, where the first prompt indicates to recognize description of each entity in the first text, and the second prompt indicates to determine, as indicated by the second text, the first text based on the description of each entity; and obtain, based on the first text, the first prompt, and the second prompt by using a language model, a result of determining the first text.

For specific descriptions of the processing module 702, refer to the descriptions of step 502 and step 503 in the foregoing embodiment. Details are not described herein again.

In a possible implementation, the processing module is specifically configured to:

determine the first prompt prompt and the second prompt based on the entity included in the second text by using the language model.

In a possible implementation, the obtaining module is further configured to:

obtain a third text, where the third text is content for determining the first text.

The processing module is further configured to: determine, based on the third text by using the language model, that the third text includes an abstract entity; and obtain the second text based on the third text and received explanation that is input by a user for the abstract object.

In a possible implementation, the processing module is further configured to: obtain description of each entity based on the first text and the first prompt by using the language model, and construct the second prompt based on the description of each entity.

In a possible implementation, the first text includes case description, and the second text includes law elements. Alternatively, the first text includes medical condition description, and the second text includes medical elements.

The following describes a terminal device provided in an embodiment of this application. FIG. 8 is a diagram of a structure of a terminal device according to an embodiment of this application. The terminal device 800 may be specifically a mobile phone, a tablet computer, a notebook computer, a wearable smart device, or the like. This is not limited herein. The terminal device 800 implements a function of the data processing method in the embodiment corresponding to FIG. 5. Specifically, the terminal device 800 includes a receiver 801, a transmitter 802, a processor 803, and a memory 804 (where there may be one or more processors 803 in the terminal device 800). The processor 803 may include an application processor 8031 and a communication processor 8032. In some embodiments of this application, the receiver 801, the transmitter 802, the processor 803, and the memory 804 may be connected through a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor, operation instructions, an executable module or a data structure, or a subset thereof, or an extended set thereof. The operation instructions may include various operation instructions used to implement various operations.

The processor 803 controls an operation of the terminal device. In a specific application, components of the terminal device are coupled together by using a bus system. In addition to a data bus, the bus system may further include a power bus, a control bus, a status signal bus, and the like. However, for clear description, various types of buses in the figure are referred to as the bus system.

The method disclosed in the foregoing embodiment of this application may be applied to the processor 803, or implemented by the processor 803. The processor 803 may be an integrated circuit chip and has a signal processing capability. In an implementation process, the steps of the foregoing method may be implemented through an integrated logic circuit of hardware in the processor 803, or by using instructions in a form of software. The processor 803 may be a general-purpose processor, a digital signal processor (digital signal processor, DSP), a microprocessor, a microcontroller, or a processor applicable to an AI operation such as a vision processing unit (vision processing unit, VPU) or a tensor processing unit (tensor processing unit, TPU), and may further include an application-specific integrated circuit (application-specific integrated circuit, ASIC), a field programmable gate array (field programmable gate array, FPGA) or another programmable logic device, a discrete gate or a transistor logic device, or a discrete hardware component. The processor 803 may implement or perform methods, steps and logical block diagrams disclosed in embodiments of this application. The general-purpose processor may be a microprocessor, or the processor may be any conventional processor or the like. The steps of the methods disclosed with reference to embodiments of this application may be directly completed by a hardware decoding processor, or may be performed and completed by using a combination of a hardware module and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 804. The processor 803 reads information in the memory 804, and completes step 501 to step 503 in the foregoing embodiment together with hardware of the processor 803.

The receiver 801 may be configured to: receive input digital or character information, and generate a signal input related to a related setting and function control of the terminal device. The transmitter 802 may be configured to output the digital or character information through a first interface. The transmitter 802 may be further configured to send instructions to a disk pack through the first interface, to modify data in the disk pack. The transmitter 802 may further include a display device, for example, a display screen.

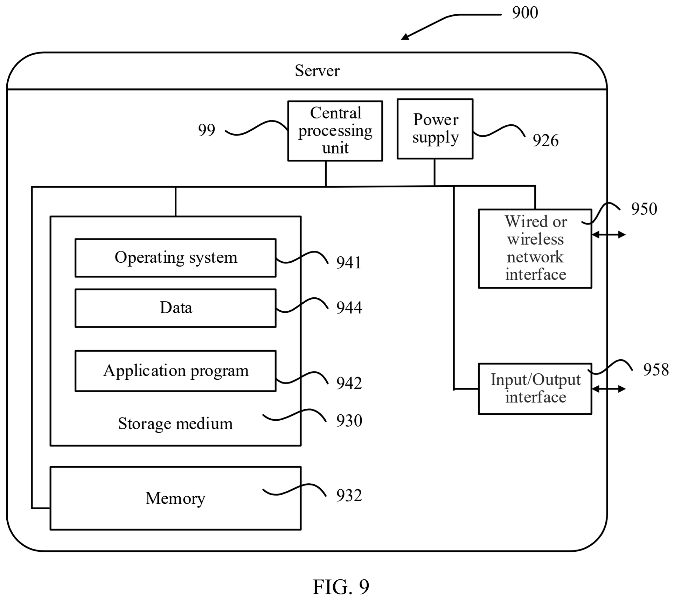

An embodiment of this application further provides a server. FIG. 9 is a diagram of a structure of a server according to an embodiment of this application. Specifically, the server 900 is implemented by one or more servers. A big difference may be caused due to different configurations or performance of the server 900. The server 900 may include one or more central processing units (central processing units, CPUs) 99 (for example, one or more processors), a memory 932, and one or more storage media 930 (for example, one or more mass storage devices) for storing application programs 942 or data 944. The memory 932 and the storage medium 930 may be configured for ephemeral storage or persistent storage. The program stored in the storage medium 930 may include one or more modules (not shown in the figure), and each module may include a series of instruction operations for the server. Further, the central processing unit 99 may be configured to communicate with the storage medium 930, to perform, on the server 900, a series of instruction operations in the storage medium 930.

The server 900 may further include one or more power supplies 926, one or more wired or wireless network interfaces 950, one or more input/output interfaces 958, or one or more operating systems 941 such as Windows ServerTM, Mac OS XTM, UnixTM, LinuxTM, and FreeBSDTM.

Specifically, the server may perform step 501 to step 503 in the foregoing embodiment.

An embodiment of this application further provides a computer program product. When the computer program product runs on a computer, the computer is caused to perform the steps performed by the foregoing execution device, or the computer is caused to perform the steps performed by the foregoing training device.

An embodiment of this application further provides a computer-readable storage medium. The computer-readable storage medium stores a program used for signal processing. When the program is run on a computer, the computer is caused to perform the steps performed by the foregoing execution device, or the computer is caused to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the data processing method described in the foregoing embodiment, or enable a chip in the training device to perform the data processing method described in the foregoing embodiment. Optionally, the storage unit is a storage unit in the chip, for example, a register or a cache. Alternatively, the storage unit may be a storage unit that is located in a wireless access device and that is located outside the chip, for example, a read-only memory (read-only memory, ROM), another type of static storage device that can store static information and instructions, or a random access memory (random access memory, RAM).

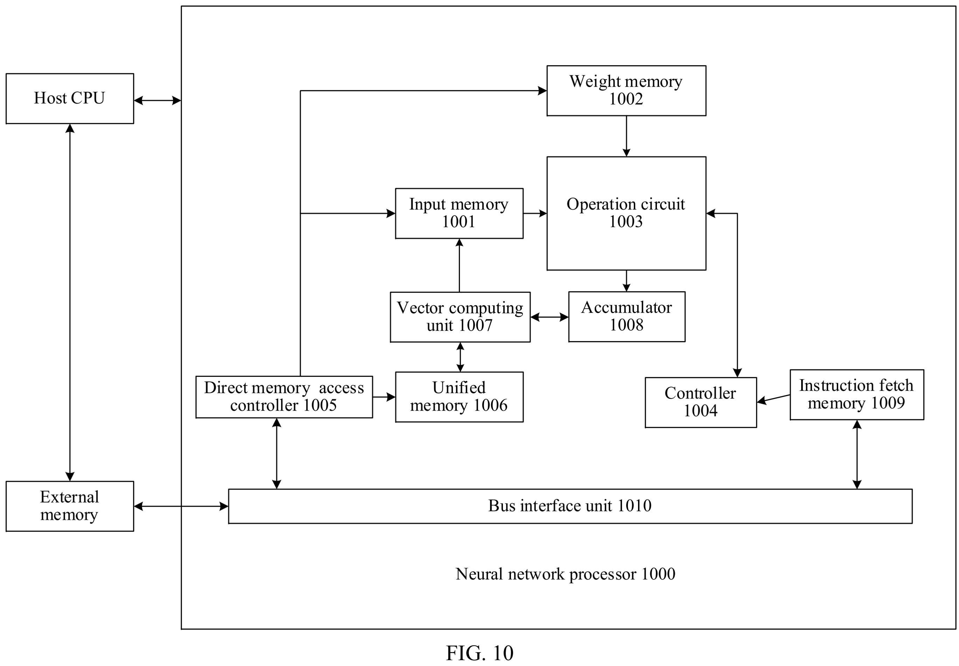

Specifically, FIG. 10 is a diagram of a structure of a chip according to an embodiment of this application. The chip may be represented as a neural network processor NPU 1000. The NPU 1000 is mounted to a host CPU (Host CPU) as a coprocessor, and a task is assigned by the host CPU. A core part of the NPU is an operation circuit 1003. A controller 1004 controls the operation circuit 1003 to extract matrix data in a memory and perform a multiplication operation.

The NPU 1000 may implement, through cooperation between internal components, the data processing method provided in the embodiment described in FIG. 5.

More specifically, in some implementations, the operation circuit 1003 in the NPU 1000 includes a plurality of process engines (Process Engines, PEs). In some implementations, the operation circuit 1003 is a two-dimensional systolic array. The operation circuit 1003 may alternatively be a one-dimensional systolic array or another electrical circuit capable of performing mathematical operations such as multiplication and addition. In some implementations, the operation circuit 1003 is a general-purpose matrix processor.

For example, it is assumed that there is an input matrix A, a weight matrix B, and an output matrix C. The operation circuit obtains, from a weight memory 1002, data corresponding to the matrix B, and buffers the data on each PE in the operation circuit. The operation circuit obtains data of the matrix A from an input memory 1001, performs a matrix operation on the data and the matrix B, and stores, in an accumulator (accumulator) 1008, a part of results or a final result for an obtained matrix.

A unified memory 1006 is configured to store input data and output data. Weight data is transferred to the weight memory 1002 by using a direct memory access controller (Direct Memory Access Controller, DMAC) 1005. Input data is also transferred to the unified memory 1006 by using the DMAC.

A BIU is a bus interface unit, that is, a bus interface unit 1010, and is used by an AXI bus to interact with the DMAC and an instruction fetch buffer (Instruction Fetch Buffer, IFB) 1009.

The bus interface unit 1010 (Bus Interface Unit, BIU for short) is used by the instruction fetch memory 1009 to obtain instructions from an external memory, and is further used by the direct memory access controller 1005 to obtain original data of the input matrix A or the weight matrix B from the external memory.

The DMAC is mainly configured to transfer input data in an external memory DDR to the unified memory 1006, transfer the weight data to the weight memory 1002, or transfer the input data to the input memory 1001.

A vector computing unit 1007 includes a plurality of operation processing units. When necessary, the vector computing unit 1007 performs further processing on an output of the operation circuit 1003, for example, vector multiplication, vector addition, an exponential operation, a logarithmic operation, and value comparison. The vector computing unit 1007 is mainly used for network computing at a non-convolutional/fully connected layer in a neural network, such as batch normalization (batch normalization), pixel-level summation, and up-sampling of a feature plane.

In some implementations, the vector computing unit 1007 can store, in the unified memory 1006, a vector that is output and processed. For example, the vector computing unit 1007 may apply a linear function or a non-linear function to the output of the operation circuit 1003, for example, perform linear interpolation on a feature plane extracted at a convolutional layer, or add value vectors to generate an activation value. In some implementations, the vector computing unit 1007 generates a value obtained through normalization, a value obtained through pixel-level summation, or both of the values. In some implementations, the vector that is output and processed can be used as an activation input to the operation circuit 1003, for example, for use in a subsequent layer in the neural network.

The instruction fetch memory (instruction fetch buffer) 1009 connected to the controller 1004 is configured to store instructions used by the controller 1004.

The unified memory 1006, the input memory 1001, the weight memory 1002, and the instruction fetch memory 1009 are all on-chip memories. The external memory is private to a hardware architecture of the NPU.

Any one of the processors mentioned above may be a general-purpose central processing unit, a microprocessor, an ASIC, or one or more integrated circuits for controlling execution of the program.

In addition, it should be noted that the apparatus embodiments described above are merely examples. The units described as separate parts may or may not be physically separate, and the components displayed as units may or may not be physical units, that is, may be located in one place, or may be distributed on a plurality of network units. Some or all of the modules may be selected based on an actual need to achieve the objectives of the solutions of embodiments. In addition, in the accompanying drawings of the apparatus embodiments provided in this application, connection relationships between the modules indicate that the modules have a communication connection with each other, which may be specifically implemented as one or more communication buses or signal cables.

Based on the descriptions of the foregoing implementations, a person skilled in the art may clearly understand that this application may be implemented by software in addition to necessary universal hardware, or certainly, may be implemented by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1.   A data processing method, wherein the method comprises:

obtaining a first text and a second text, wherein the first text is a text that needs to be determined, and the second text is content for determining the first text;
determining a first prompt prompt and a second prompt based on an entity comprised in the second text, wherein the first prompt indicates to recognize description of each entity in the first text, and the second prompt indicates to determine, as indicated by the second text, the first text based on the description of each entity; and
obtaining, based on the first text, the first prompt, and the second prompt by using a language model, a result of determining the first text.

2.   The method according to claim 1, wherein the determining the first prompt prompt and the second prompt based on the entity comprised in the second text comprises:
determining the first prompt prompt and the second prompt based on the entity comprised in the second text by using the language model.

3.   The method according to claim 1 or 2, wherein the method further comprises:

obtaining a third text, wherein the third text is content for determining the first text;
determining, based on the third text by using the language model, that the third text comprises an abstract entity; and
obtaining the second text based on the third text and received explanation that is input by a user for the abstract object.

4. The method according to any one of claims 1 to 3, wherein the method further comprises:
   obtaining description of each entity based on the first text and the first prompt by using the language model, and constructing the second prompt based on the description of each entity.

5. The method according to any one of claims 1 to 4, wherein the first text comprises case description, and the second text comprises law elements; or the first text comprises medical condition description, and the second text comprises medical elements.

6. A data processing apparatus, wherein the apparatus comprises:

   an obtaining module, configured to obtain a first text and a second text, wherein the first text is a text that needs to be determined, and the second text is content for determining the first text; and
   a processing module, configured to: determine a first prompt prompt and a second prompt based on an entity comprised in the second text, wherein the first prompt indicates to recognize description of each entity in the first text, and the second prompt indicates to determine, as indicated by the second text, the first text based on the description of each entity; and obtain, based on the first text, the first prompt, and the second prompt by using a language model, a result of determining the first text.

7. The apparatus according to claim 6, wherein the processing module is specifically configured to:
   determine the first prompt prompt and the second prompt based on the entity comprised in the second text by using the language model.

8. The apparatus according to claim 6 or 7, wherein the obtaining module is further configured to:

   obtain a third text, wherein the third text is content for determining the first text; and
   the processing module is further configured to: determine, based on the third text by using the language model, that the third text comprises an abstract entity; and obtain the second text based on the third text and received explanation that is input by a user for the abstract object.

9. The apparatus according to any one of claims 6 to 8, wherein the processing module is further configured to: obtain description of each entity based on the first text and the first prompt by using the language model, and construct the second prompt based on the description of each entity.

10. The apparatus according to any one of claims 6 to 9, wherein the first text comprises case description, and the second text comprises law elements; or the first text comprises medical condition description, and the second text comprises medical elements.

11. A computing device, wherein the computing device comprises a memory and a processor, the memory stores code, and the processor is configured to obtain the code and perform the method according to any one of claims 1 to 5.

12. A computer storage medium, wherein the computer storage medium stores one or more instructions, and when the instructions are executed by one or more computers, the one or more computers are caused to implement the method according to any one of claims 1 to 5.

13. A computer program product, comprising code, wherein when the code is executed, the code is used to implement the method according to any one of claims 1 to 5.

14. A chip, comprising a processor, wherein the processor is configured to support a data processing apparatus in implementing the method according to any one of claims 1 to 5.

FIG. 1A

102

101

Parameter → Vertical-domain language analysis application program → Processing result

103

## FIG. 1B

**Parameter** →

← **Processing result**

**Terminal 100**

**Server 200**

## FIG. 1C

Terminal 100

FIG. 1D

FIG. 2

FIG. 3

EP 4 708 118 A1

FIG. 4

Obtain a first text and a second text, where the first text is a text that needs to be determined, and the second text is content for determining the first text — 501

Determine a first prompt prompt and a second prompt based on an entity included in the second text, where the first prompt indicates to recognize description of each entity in the first text, and the second prompt indicates to determine, as indicated by the second text, the first text based on the description of each entity — 502

Obtain, based on the first text, the first prompt and the second prompt by using a language model, a result of determining the first text — 503

FIG. 5

**Human-machine interaction**

Input 1: Legal text
Input 2: Legal elements

A large model determines whether the input 2 is an abstract element

Y → Example request → (back to Input)

N

The large model determines whether the input 1 includes an entity

Y → Entity connection {Entity type: entity value}

N

**Prompt management**

Large language model (as a prompt generator)

Prompt including the entity value and rules

**Prompt application**

Large language model (as an executor of specific instructions)

Numerical calculation

Entity verification

...

FIG. 6

700

701

Obtaining module

702

Processing module

FIG. 7

800

Terminal device

Antenna

Antenna

Receiver 801

Transmitter 802

Processor 803

Memory
804

Application
processor 8031

Communication
processor 8032

FIG. 8

900

Server

99    Central processing unit

Power supply    926

Operating system    941

Data    944

Application program    942

Storage medium    930

Memory    932

Wired or wireless network interface    950

Input/Output interface    958

FIG. 9

FIG. 10

## INTERNATIONAL SEARCH REPORT

| International application No. |
| --- |
| **PCT/CN2024/105683** |

### A. CLASSIFICATION OF SUBJECT MATTER

G06F40/295(2020.01)i; G06F8/30(2018.01)i; G06F40/289(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 文本, 提示, 语言模型, 实体, 医疗, 病情, text, prompt, language model, entity, medical

### C. DOCUMENTS CONSIDERED TO BE RELEVANT

| Category* | Citation of document, with indication, where appropriate, of the relevant passages | Relevant to claim No. |
| --- | --- | --- |
| PX | CN 117151099 A (HUAWEI TECHNOLOGIES CO., LTD.) 01 December 2023 (2023-12-01) claims 1-14 | 1-14 |
| X | CN 114913953 A (BEIJING HUIMEIYUN TECHNOLOGY CO., LTD.) 16 August 2022 (2022-08-16) description, paragraphs [0029]-[0077] | 1-14 |
| A | CN 114239578 A (ALIBABA DAMO ACADEMY (HANGZHOU) TECHNOLOGY CO., LTD. et al.) 25 March 2022 (2022-03-25) entire document | 1-14 |
| A | CN 116303872 A (BEIJING BAIDU NETCOM SCIENCE AND TECHNOLOGY CO., LTD.) 23 June 2023 (2023-06-23) entire document | 1-14 |
| A | CN 116303980 A (NOCODE TECHNOLOGY (HANGZHOU) CO., LTD.) 23 June 2023 (2023-06-23) entire document | 1-14 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 October 2024** | **18 October 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/105683** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 20150111315 A (KOREA ADVANCED INSTITUTE OF SCIENCE AND TECHNOLOGY) 05 October 2015 (2015-10-05)<br>entire document | 1-14 |

Form PCT/ISA/210 (second sheet) (July 2022)

## INTERNATIONAL SEARCH REPORT
### Information on patent family members

International application No.

**PCT/CN2024/105683**

| Patent document cited in search report | | | Publication date (day/month/year) | Patent family member(s) | Publication date (day/month/year) |
|---|---|---|---|---|---|
| CN | 117151099 | A | 01 December 2023 | None | |
| CN | 114913953 | A | 16 August 2022 | None | |
| CN | 114239578 | A | 25 March 2022 | None | |
| CN | 116303872 | A | 23 June 2023 | None | |
| CN | 116303980 | A | 23 June 2023 | None | |
| KR | 20150111315 | A | 05 October 2015 | None | |

Form PCT/ISA/210 (patent family annex) (July 2022)

**REFERENCES CITED IN THE DESCRIPTION**

**Patent documents cited in the description**

- CN 202310901078X